# FASCICULE DE BREVET EUROPEEN

(11) **EP 3 638 539 B1**
(45) Date de publication et mention de la délivrance du brevet: **24.02.2021**
(21) Numéro de dépôt: 18739896.1
(22) Date de dépôt: 11.06.2018
(51) Int. Cl.: B60Q 1/08, B60Q 1/14, B60Q 1/18, B60Q 11/00, B62J 45/40, B62J 6/02

(54) **SYSTEME DE COMPENSATION DES VARIATIONS D'INCLINAISONS D'UN DISPOSITIF D'UN MOYEN DE TRANSPORT PAR RAPPORT A L'AXE DE GRAVITATION TERRESTRE**
SYSTEM ZUR KOMPENSATION DER NEIGUNGSWINKELVERÄNDERUNGEN EINER VORRICHTUNG EINES TRANSPORTMITTELS IN BEZUG AUF DIE ERDANZIEHUNGSACHSE
SYSTEM FOR COMPENSATING THE TILT ANGLE VARIATIONS OF A DEVICE OF A TRANSPORT MEANS RELATIVE TO THE EARTH'S GRAVITATIONAL AXIS

(30) Priorité: 12.06.2017 FR 1755253
(43) Date de publication de la demande: 22.04.2020
(73) Titulaire: Gironac, 91400 Orsay (FR)
(72) Inventeur: CRESCENCIO, Pedro, 92700 Colombes (FR)
(74) Mandataire: Fidal Innovation
(86) Numéro de dépôt international: PCT/FR2018/051348
(87) Numéro de publication internationale: WO 2018/229405

(56) Documents cités:
- WO-A1-2015/038348
- DE-A1-102016 111 578
- FR-A1- 2 844 759
- US-A1- 2011 216 548

## Description

### [Domaine de l'invention]

La présente invention porte sur un système d'adaptation aux variations d'inclinaisons, par rapport à l'axe de gravitation terrestre, d'un dispositif porté par un moyen de transport et subissant sa trajectoire. Le système permet au dispositif de s'adapter en temps réel à l'orientation du moyen de transport dans l'espace.

Un tel système peut s'appliquer à tous les moyens de transport, de personnes ou de marchandises, qu'ils soient terrestres, maritimes ou aériens, tels que les motos, les voitures, les camions, les bateaux, les drones, les avions ou les hélicoptères par exemple.

Ainsi, le système permet par exemple de stabiliser une plateforme de chargement de marchandises d'un camion afin que la plateforme puisse compenser la force centrifuge subie lors d'un virage par exemple. Dans un autre exemple d'application, plus particulièrement adapté aux motocyclettes ou aux bateaux, le dispositif permet de corriger en temps réel l'éclairage du moyen de transport pour qu'il éclaire toujours la direction vers laquelle le moyen de transport se dirige et ce, malgré les variations d'inclinaisons du moyen de transport soumis aux effets de roulis, de tangage et de lacet.

Dans la suite de la description, un exemple particulier est décrit dans le cadre d'une application à la motocyclette, encore dénommée « moto » dans toute la suite de la description. Bien sûr, l'invention ne se limite pas à cet exemple particulier et peut s'appliquer à d'autres champs d'application tels que décrits ci-dessus.

### [Art antérieur]

Aujourd'hui, les motos doivent satisfaire des normes d'éclairage, fixées notamment par les réglementations Européennes ECEATRANS/WP.29/2012/80 ; ECE/TRANS/WP.29/2012/82, ECE/TRANS/WP.29/2014/63 et ECE/TRANS/WP.29/2013/9 3 et leurs compléments. Pour satisfaire les critères d'homologation, les motos sont examinées à l'arrêt en position droite, c'est-à-dire sans aucune inclinaison par rapport à la route, que ce soit selon le mouvement de roulis (ou « roll » en terminologie anglo-saxonne), vers la gauche ou la droite selon le mouvement de lacet (ou « yaw » en terminologie anglo-saxonne) ou vers le haut ou le bas selon le mouvement de tangage (ou « pitch » en terminologie anglo-saxonne).

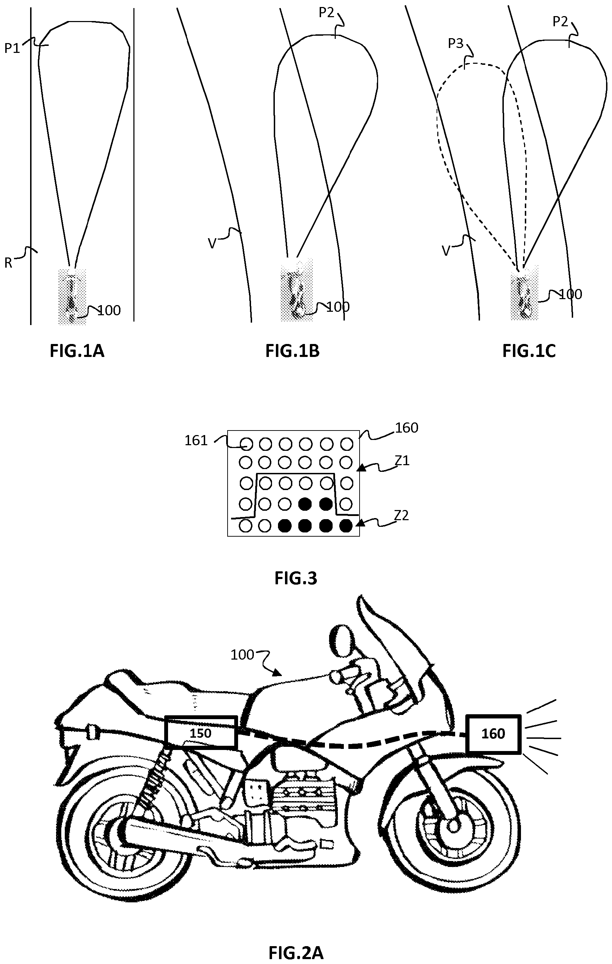

La Figure 1A représente la projection P1 du faisceau lumineux du phare d'une moto 100 sur une route R, lorsque la moto est en position droite dans l'espace, c'est-à-dire non inclinée autour des axes de roulis, lacet ou tangage.

Or, en roulant, notamment lors de la prise d'un virage, le pilote incline la moto par rapport à la route selon le mouvement de roulis. Ce mouvement de roulis entraine un décalage de la projection du phare de la moto qui n'éclaire plus la direction vers laquelle se dirige la moto, mais qui éclaire le côté extérieur du virage. Ce problème est accentué avec l'effet de contre-braquage qui apparait lorsque le motard appuie sur le guidon de la moto dans une direction inverse au sens du virage, pour les motos dont le phare est installé sur la fourche. Pour illustrer ce phénomène, la Figure 1B représente la projection P2 du faisceau lumineux du phare d'une moto 100 en position inclinée, dans un virage V. La projection P2 éclaire dans ce cas l'extérieur du virage V, et non plus la direction vers laquelle la moto se dirige. Selon le sens du virage, la lumière du phare peut éblouir les automobilistes arrivant en sens inverse sur la route.

La société BMW commercialise une moto haut de gamme équipée d'une lampe au xénon surmontée d'un miroir motorisé qui permet de compenser les effets de tangage et de roulis. Cependant, ce dispositif n'est pas conçu pour être installé sur un autre modèle de moto et encore moins sur un modèle d'une autre marque. Il est très coûteux et il ne permet pas de compenser les effets de lacet, c'est-à-dire les mouvements de rotation autour de l'axe de gravitation terrestre lui-même perpendiculaire au sol.

Il existe aussi des systèmes comprenant deux dispositifs à trois diodes électroluminescentes (LED) disposés de part et d'autre du phare. Dans ce cas, en fonction du roulis de la moto, c'est-à-dire de l'angle d'inclinaison de la moto autour de son axe longitudinal, le système commande l'éclairage d'au moins une LED du dispositif situé vers l'extérieur du virage, afin que celui-ci éclaire vers le côté non éclairé. Ces systèmes ne permettent de compenser que l'effet de roulis mais pas les deux autres effets de tangage et de lacet, si bien que leur performance n'est pas optimale.

Il existe également des dispositifs mécaniques permettant, sur détection de l'effet de roulis, d'actionner un moteur agissant sur des mécanismes afin de tourner un phare auxiliaire et compenser l'effet de roulis. Dans ce cas également, seul l'effet de roulis est pris en compte, mais pas l'effet de tangage ni celui de lacet. De plus, pour un même virage et à vitesse constante, un même pilote pourra incliner sa moto différemment. Or, un tel dispositif mécanique ne permet pas de compenser des différences d'angles d'inclinaison tout en respectant les réglementations Européennes sur l'éclairage.

Le document FR 2844759 décrit un dispositif de commande d'éclairage de moto comprenant des moyens permettant d'orienter les angles d'assiette, de roulis et de lacet du phare lors du déplacement de la moto. Ces moyens comprennent un mécanisme d'orientation du phare, des moyens tels que des gyroscopes permettant de connaitre les angles d'inclinaison de la moto selon les axes X et Y, au moins un accéléromètre permettant de déterminer l'accélération verticale de la moto, et des moyens de calculs permettant de déterminer la trajectoire de la moto en fonction de ses inclinaisons et de sa vitesse. Un moyen de commande agit sur le mécanisme d'orientation du phare de manière à diriger l'éclairage de la moto en direction de la trajectoire calculée.

Le document WO 2015/038348 décrit un appareil de calcul d'une valeur d'angle d'inclinaison d'un véhicule, un appareil pour contrôler une distribution horizontale de l'éclairage d'un véhicule lorsque le véhicule est incliné, un phare de véhicule permettant une distribution horizontale de la lumière lorsque le véhicule est incliné et enfin un appareil pour calculer une valeur d'angle d'un véhicule. La moto comprend une centrale inertielle qui fournit des informations sur les angles de tangage, de roulis et de lacet, ainsi que sur l'accélération selon les axes X, Y et Z. La combinaison de ces informations permet de calculer l'angle d'inclinaison d'une moto. La centrale inertielle comprend un processeur, des capteurs de mouvement tels que des gyroscopes 82, un accéléromètre 84, un capteur magnétique 86 et un moyen de communication.

Le document US 2011/216,548 décrit une moto portant des caméras optiques permettant de déterminer la position et l'orientation du pilote par rapport à la moto. Ces mesures sont utilisées pour déterminer la vitesse angulaire, l'accélération linéaire et l'angle du véhicule.

### [Problème technique]

L'invention a donc pour but de remédier à au moins un des inconvénients de l'art antérieur. L'invention vise notamment à proposer un système d'adaptation aux variations d'inclinaisons, par rapport à l'axe de gravitation terrestre, d'un dispositif porté par un moyen de transport, qui prend en compte à la fois les effets de roulis, mais aussi de lacet et de tangage et qui soit très réactif. Le système doit en outre être très réactif et permettre une orientation instantanée du dispositif et de s'adapter parfaitement à la trajectoire du moyen de transport. Enfin, le système doit aussi permettre une fabrication industrielle simple et peu coûteuse.

L'invention vise en outre à proposer un moyen de transport comprenant d'un tel système d'adaptation aux variations d'inclinaisons par rapport à l'axe de gravitation terrestre.

### [Brève description de l'invention]

A cet effet, l'invention a pour objet un système d'adaptation aux variations d'inclinaisons par rapport à l'axe de gravitation terrestre d'un dispositif porté par un moyen de transport soumis à des mouvements de roulis, de tangage et de lacet, ledit système comprenant ledit dispositif et une centrale inertielle couplé audit dispositif, ladite centrale inertielle comprenant :
- un ensemble de capteurs permettant de mesurer, en temps réel, les inclinaisons dans l'espace dudit moyen de transport soumis à des mouvements de roulis, de tangage et de lacet, et
- une unité de commande apte, sur réception des mesures issues de l'ensemble de capteurs, à déterminer l'orientation dans l'espace et à estimer la trajectoire dudit moyen de transport, et à piloter ledit dispositif de manière à adapter sa position à ladite orientation dans l'espace et à ladite trajectoire estimée dudit moyen de transport
ledit système étant caractérisé en ce qu'il comprend en outre un module déporté adapté pour être fixé sur un équipement porté par l'utilisateur du moyen de transport, et comprenant un deuxième ensemble de capteurs, mesurant en temps réel des angles de roulis, de tangage et de lacet, et un moyen de communication pour communiquer les mesures réalisées par ledit deuxième ensemble de capteurs vers la centrale inertielle comprenant elle aussi un moyen de communication et en ce que, en fonction de paramètres de fonctionnement sélectionnés, l'unité de commande prend en compte les mesures d'angles issues du premier et du deuxième ensemble de capteurs dans l'estimation de la trajectoire du moyen de transport.

Ainsi, l'unité de commande pilote le dispositif associé pour qu'il s'adapte aux mouvements de roulis, de tangage et de lacet subis par le moyen de transport, de sorte qu'il semble ne pas subir les variations d'orientation dans l'espace du moyen de transport. Le module déporté permet d'effectuer lui aussi des mesures d'angles de roulis, de tangage et de lacet et d'affiner la détermination de l'orientation dans l'espace du moyen de transport, d'améliorer la réactivité de pilotage du dispositif et d'améliorer l'orientation du dispositif de manière à s'adapter parfaitement à la trajectoire suivie par le moyen de transport.

Selon d'autres caractéristiques optionnelles du système :
- le dispositif piloté par l'unité de commande de la centrale inertielle est choisi parmi l'un au moins des dispositifs suivants : une source lumineuse, un dispositif de capture d'images, un dispositif de pointage laser, une plateforme mobile ;
- le dispositif est une source lumineuse dont la position est adaptée mécaniquement au moyen de trois servomoteurs ;
- le dispositif est une source lumineuse matricielle et l'unité de commande de la centrale inertielle pilote la source lumineuse de manière à adapter la position de la projection de son faisceau lumineux.
- la source lumineuse matricielle se présente sous l'une des formes suivantes : une matrice à diodes électroluminescentes, dont le fonctionnement de chaque diode est piloté par l'unité de commande de la centrale inertielle, un écran à cristaux liquide, dont chaque cristal est piloté par l'unité de commande de la centrale inertielle et laisse passer plus ou moins de lumière issue d'une diode électroluminescente ou un projecteur comprenant une puce DLP dont chaque micro-miroir est piloté par l'unité de commande de la centrale inertielle pour agir sur la trajectoire de réflexion d'un faisceau lumineux issu d'une diode électroluminescente ;
- la matrice peut prendre la forme d'un dispositif unique ou être composée de plusieurs unités ;
- le système comprend en outre un moyen de calibrage de l'ensemble de capteurs, permettant de corriger une dérive selon l'angle de lacet en recalant ledit angle de lacet à zéro lorsqu'une partie directionnelle et une partie fixe du moyen de transport sont alignées.
- le moyen de calibrage se présente sous l'une des formes suivantes : un premier magnétomètre disposé sur la partie fixe du moyen de transport et un deuxième magnétomètre disposé sur la partie directionnelle du moyen de transport, lesdits magnétomètres étant connectés connecté à l'unité de commande de la centrale inertielle, ladite unité de commande étant apte à comparer les mesures issues des deux magnétomètres et, en fonction du résultat de la comparaison, à envoyer un signal à l'ensemble de capteurs pour recaler l'angle de lacet à zéro ; un aimant disposé sur la partie directionnelle du moyen de transport et un capteur à effet Hall disposé sur la partie fixe du moyen de transport et apte à détecter les variations du champ électromagnétique émis par l'aimant, ledit capteur à effet Hall étant connecté à l'unité de commande de la centrale inertielle, ladite unité de commande étant apte à comparer l'intensité du champ magnétique mesuré par le capteur à effet Hall à une valeur seuil prédéterminée et, en fonction du résultat de la comparaison, à envoyer un signal à l'ensemble de capteurs pour recaler l'angle de lacet à zéro ; ou un aimant disposé sur la partie directionnelle du moyen de transport et un interrupteur à lame souple disposé sur la partie fixe dudit moyen de transport, ledit interrupteur étant connecté à l'unité de commande de la centrale inertielle, ladite unité de commande étant apte à envoyer un signal à l'ensemble de capteurs pour recaler l'angle de lacet à zéro dès lors que l'interrupteur est en position fermée ;
- le système comprend en outre un capteur de géolocalisation, communiquant avec l'unité de commande de la centrale inertielle et permettant à cette-dernière d'anticiper le pilotage du dispositif associé ;
- la centrale inertielle est raccordée aux bornes de la source d'énergie électrique du moyen de transport et comprend en outre un module de détermination de l'état de fonctionnement du moteur, apte à détecter une variation de tension aux bornes de ladite source d'énergie électrique et, lorsque la variation de tension est supérieure à une valeur seuil prédéterminée, à envoyer un signal à l'unité de commande pour qu'elle s'allume ;
- le système comprend en outre un terminal mobile comprenant un logiciel applicatif de gestion des paramètres de fonctionnement du système, ledit terminal mobile étant apte à identifier et s'appairer avec ladite centrale inertielle et à communiquer avec elle afin de paramétrer son fonctionnement ;
- le système comprend en outre un serveur distant apte à communiquer avec le terminal mobile et dans lequel est (sont) stockée(s) une ou plusieurs base(s) de données de profils utilisateurs ;
- le dispositif piloté par l'unité de commande de la centrale inertielle est une source lumineuse additionnelle ou intégrée au phare du moyen de transport;
- le système comprend en outre un mécanisme motorisé d'ajustement de la position du dispositif par rapport à l'assiette du moyen de transport au démarrage, le mécanisme motorisé étant actionné par le biais de l'unité de commande de la centrale inertielle sur réception d'une mesure de l'angle de tangage et/ou sur réception d'une commande émanant du terminal mobile ;
- l'unité de commande de la centrale inertielle est raccordée à un capteur de courant continu apte à mesurer le courant dans un câble d'alimentation du phare du moyen de transport et, sur réception de la mesure de courant, l'unité de commande compare la valeur mesurée à une valeur seuil prédéterminée et, en fonction du résultat de la comparaison, détermine si le phare est allumé en mode « plein phare » ou non ;
- le terminal mobile est en outre apte à identifier et à s'appairer avec au moins un module déporté.

Un autre objet de l'invention se rapporte à un moyen de transport de personnes ou de marchandises, caractérisé en ce qu'il comprend un système de compensation des variations d'inclinaisons conforme à celui qui vient d'être décrit, et en ce que ledit moyen de transport est choisi parmi au moins l'un des moyens suivants : engin roulant tel que motocyclette, automobile, camion, bicyclette ; engin flottant tel que bateau, scooter de mer, planche de surf ou à voile ; ou engin volant tel que avion, drone, hélicoptère, delta plane, parapente.

D'autres particularités et avantages de l'invention apparaitront à la lecture de la description faite à titre d'exemple illustratif et non limitatif, en référence aux Figures annexées qui représentent :
- les Figures 1A et 1B, déjà décrites, la projection du faisceau lumineux d'une moto classique circulant respectivement sur une route droite et courbe ;
- la Figure 1C, la projection du faisceau lumineux d'une moto circulant sur la même route courbe que la moto de la Figure 1B, ladite moto étant équipée d'un système selon l'invention ;
- la Figure 2A, un schéma très simplifié d'une moto équipée d'un système conforme à l'invention selon un premier mode de réalisation ;
- la Figure 2B, un schéma synoptique du système de la Figure 2A ;
- la Figure 3, un schéma simplifié d'une matrice à LED vue de face ;
- la Figure 4A, un schéma très simplifié d'une moto équipée d'un système conforme à l'invention selon un deuxième mode de réalisation ;
- la Figure 4B, un schéma synoptique du système de la Figure 4A.

### [Description détaillée de l'invention]

Dans la suite de la description, on désigne par « inclinaisons » les changements d'orientation dans l'espace par rapport à l'axe de gravitation terrestre, dus aux mouvements de roulis, de tangage et de lacet. Plus particulièrement, le mouvement de roulis, est un mouvement de rotation autour de l'axe longitudinal du moyen de transport, encore dénommé axe de roulis ; le mouvement de tangage est un mouvement de rotation autour de l'axe transversal du moyen de transport, encore dénommé axe de tangage, et le mouvement de lacet est un mouvement de rotation autour de l'axe vertical de lacet qui se confond avec l'axe de gravitation terrestre.

L'axe de gravitation terrestre, est un axe passant par un point du sol et perpendiculaire au sol, le long duquel la terre exerce sa force gravitationnelle sur un objet.

On entend par « assiette » d'un moyen de transport, les différences de hauteur entre l'avant et l'arrière du moyen de transport. Dans l'exemple particulier d'une moto, l'assiette désigne le bon équilibre de l'ensemble moto-pilote dans le sens longitudinal à l'arrêt. Elle peut se modifier lorsque la moto emporte une charge supplémentaire. Ainsi, l'assiette de la moto au démarrage, selon qu'elle transporte une charge supplémentaire ou non, doit être prise en compte pour régler la hauteur du phare de la moto afin que la projection de son faisceau lumineux n'éblouisse pas les autres usagers de la route arrivant en sens inverse et respecte les normes d'éclairage.

On définit par les directions « droite ou gauche », les directions suivies par le moyen de transport, selon le sens de sa trajectoire.

De manière générale, l'invention se rapporte à un système de compensation des variations d'inclinaisons d'un moyen de transport par rapport à l'axe de gravitation terrestre. Le système selon l'invention comprend un dispositif porté par le moyen de transport et couplé à une centrale inertielle. La centrale inertielle comprend un ensemble de capteurs permettant de mesurer en temps réel les inclinaisons dans l'espace du moyen de transport soumis à des mouvements de roulis, de tangage et de lacet. La centrale inertielle comprend en outre une unité de commande qui, sur réception des mesures issues de l'ensemble de capteurs, détermine l'orientation du moyen de transport dans l'espace et estime sa trajectoire. Puis, en fonction de l'orientation du moyen de transport dans l'espace et de sa trajectoire estimée, l'unité de commande pilote le dispositif associé de manière à modifier sa position par rapport à l'axe de gravitation terrestre. Ainsi, le dispositif qui subit la trajectoire et les variations d'orientation du moyen de transport dans l'espace, s'adapte à la trajectoire et compense les variations d'orientation.

L'ensemble de capteurs de la centrale inertielle comprend un accéléromètre triaxial et un gyroscope triaxial.

Le dispositif piloté par l'unité de commande de la centrale inertielle peut être choisi parmi une source lumineuse, un dispositif de capture d'images, un dispositif de pointage laser ou une plateforme mobile par exemple.

Afin de mieux comprendre le système selon l'invention, celui-ci est décrit ci-après dans le cadre d'une application à la motocyclette.

Dans le cas particulier de la moto, le dispositif piloté par l'unité de commande de la centrale inertielle peut être une source lumineuse ou encore un système de capture d'image tel qu'une caméra par exemple.

Dans le mode de réalisation décrit ci-après, le dispositif est une source lumineuse. L'unité de commande pilote cette source lumineuse de manière à ce que son fonctionnement s'adapte aux variations d'orientation dans l'espace, c'est-à-dire que la projection de son faisceau lumineux éclaire toujours la direction vers laquelle se dirige la moto, quelles que soient les inclinaisons et les orientations dans l'espace de cette-dernière.

La Figure 1C illustre une moto 100 équipée du système selon l'invention, avançant dans un virage V. La projection P2 du faisceau lumineux de la moto non équipée du système est orientée vers l'extérieur du virage. Le système selon l'invention permet d'orienter la projection P3 du faisceau lumineux, en traits pointillés sur la Figure 1C, vers le centre de la route et d'éclairer la direction vers laquelle se dirige la moto.

La source lumineuse 160 est connectée à la centrale inertielle 150 qui peut, par exemple, être disposée sous la selle de la moto 100 (voir le schéma de la Figure 2A). La connexion entre la source lumineuse et la centrale inertielle peut être réalisée de manière filaire ou par liaison radio. La source lumineuse peut constituer un phare additionnel fixé sur l'endroit choisi par l'utilisateur notamment sur le garde boue avant de la moto, sur les flancs de la moto, ou à proximité du phare principal de la moto, en particulier juste au-dessous, ou bien elle peut être directement intégrée au phare de la moto.

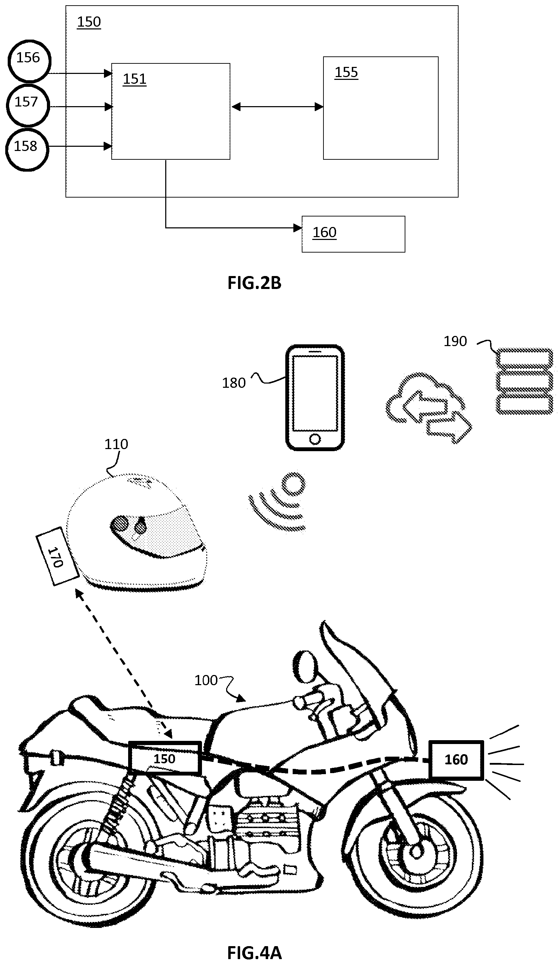

La Figure 2B représente un schéma synoptique des éléments constitutifs du système selon l'invention, selon un premier mode de réalisation. La source lumineuse 160 projette son faisceau P3 de lumière en fonction des ordres envoyés par l'unité de commande 151 de la centrale inertielle 150. La centrale inertielle 150 comprend un ensemble de capteurs 155, notamment un accéléromètre triaxial et un gyroscope triaxial, qui mesurent l'orientation de la moto dans l'espace, c'est-à-dire les angles d'inclinaison liés aux mouvements de roulis, de tangage et de lacet de la moto. Les capteurs 155 envoient leurs mesures en temps réel à l'unité de commande 151. Ces capteurs permettent également de connaitre l'ordre de grandeur de la vitesse de la moto. A partir de ces mesures, l'unité de commande 151 détermine en temps réel l'orientation de la moto dans l'espace. Elle estime en outre l'ordre de grandeur de la vitesse angulaire, le rayon de courbure du virage et ainsi, la trajectoire suivie par la moto.

En fonction de l'orientation de la moto dans l'espace et de sa trajectoire estimée, l'unité de commande 151 pilote alors la source lumineuse 160 afin d'orienter la projection de son faisceau lumineux pour qu'il éclaire dans la direction de la trajectoire suivie par la moto.

Le pilotage de la source lumineuse peut être mécanique et/ou électronique. Selon un premier mode de réalisation, la source lumineuse peut-être constituée d'une diode électroluminescente, notée par la suite LED (acronyme anglo-saxon pour « Light Emitting Diode »), disposée en amont d'une lentille optique et dont la position est modifiée au moyen de trois servomoteurs, eux-mêmes pilotés par l'unité de commande 151.

Selon un autre mode de réalisation, la source lumineuse peut être matricielle. Dans ce cas, le pilotage de la source lumineuse par l'unité de commande de la centrale inertielle permet de modifier la position de la projection P3 de son faisceau lumineux.

Une telle source lumineuse matricielle peut par exemple être constituée d'une matrice à LED. La Figure 3 schématise une telle matrice 160 vue de face, composée de plusieurs LED 161 disposées de manière matricielle. Le nombre et la disposition des LED peuvent évoluer, la matrice LED peut être composée de multiples LED sur une ou plusieurs cartes électroniques. L'unité de commande 151 de la centrale inertielle pilote alors l'allumage ou l'extinction des LED 161 en fonction de la projection P3 que doit présenter le faisceau de la source lumineuse. Sur l'exemple de la Figure 3, les LED allumées sont représentées en noir, tandis que les cercles blancs représentent les LED éteintes. Une telle matrice peut prendre la forme d'un dispositif unique ou être composée de plusieurs unités, par exemple deux unités destinées à être installées à gauche et à droite d'un véhicule, ou bien trois unités destinées à être installées à gauche, à droite et au centre d'un véhicule.

Selon encore un autre mode de réalisation, la source lumineuse matricielle peut être réalisée selon une technologie utilisée dans les vidéoprojecteurs et se présenter sous forme d'un écran à cristaux liquides, noté « LCD » dans la suite, dont les cristaux sont pilotés par l'unité de commande 151 et laissent passer plus ou moins de lumière polarisée, au moyen de deux polariseurs orthogonaux disposés sur le trajet d'une lumière issue d'une diode électroluminescente (LED). Le faisceau lumineux traversant l'écran à cristaux liquide est ensuite projeté via une lentille optique. Un tel mode de réalisation permet non seulement d'orienter la projection du faisceau lumineux dans la direction de la trajectoire suivie par la moto, mais aussi de régler la température de la lumière blanche émise par la LED. Ce réglage peut s'avérer très utile notamment en temps de pluie. En effet, la lumière blanche issue d'une LED se réfléchi sur les gouttelettes d'eau, si bien que l'utilisateur motard est éblouit par un brouillard blanc. Le fait de régler la lumière issue de la LED, grâce à l'écran à cristaux liquides (LCD), pour émettre une lumière blanche plus chaude (présentant une couleur plus jaune), permet une transmission à travers les gouttelettes d'eau et non plus une réflexion. Un autre avantage de ce mode de réalisation réside dans le fait que, grâce à l'utilisation de l'écran à cristaux liquides, il est possible d'afficher des messages lumineux. Ainsi, il est possible d'afficher la limitation de vitesse sur la route empruntée ou encore la vitesse à laquelle le véhicule roule, ou bien un panneau attention en cas de danger etc....

Selon encore un autre mode de réalisation, la source lumineuse matricielle se présente sous la forme d'un projecteur DLP (acronyme anglo-saxon pour « Digital Light Processing ») comprenant une diode électroluminescente et une puce DLP. La puce DLP comprend des micro-miroirs. Chaque micro-miroir est piloté par l'unité de commande 151 de la centrale inertielle 150 pour agir sur la trajectoire de réflexion d'un faisceau lumineux issu d'une diode électroluminescente.

Le mouvement de lacet est un mouvement de rotation autour de l'axe de gravitation terrestre. Il s'exécute donc dans un plan perpendiculaire à l'axe de la gravitation terrestre. La gravitation terrestre n'ayant pas ou peu d'impact sur ce mouvement, les capteurs 155 de la centrale inertielle 150 ont tendance à subir une dérive avec le temps. Pour corriger une telle dérive, il faut donc calibrer régulièrement les capteurs.

Pour cela, un premier mode de réalisation consiste à disposer un repère électromagnétique, tel qu'un capteur à effet Hall par exemple, sur la partie fixe du moyen de transport, par exemple le cadre de la moto, et un aimant sur la partie directionnelle du moyen de transport, par exemple sur la fourche de la moto, encore dénommée colonne de guidon. Le capteur à effet Hall détecte les variations de l'intensité du champ électromagnétique émit par l'aimant lorsque le guidon tourne de droite à gauche. L'unité de commande 151 de la centrale inertielle 150 qui reçoit le signal émanant du capteur à effet Hall 156 compare l'intensité du champ électromagnétique mesuré à une valeur seuil prédéterminée. Lorsque l'intensité du champ magnétique mesurée est supérieure ou égale à cette valeur seuil, cela signifie que les parties fixe et directionnelle du moyen de transport sont alignées, c'est-à-dire que la roue de la moto est alignée selon l'axe longitudinal de la moto. L'unité de commande 151 de la centrale inertielle 150 envoie alors un signal à l'ensemble de capteurs 155 pour recaler l'angle de lacet à zéro. De préférence, le capteur à effet Hall 156 est relié à l'unité de commande 151 par une liaison filaire.

Selon une variante, le capteur à effet Hall peut être remplacé par un interrupteur à lame souple, ledit interrupteur étant connecté à l'unité de commande de la centrale inertielle, ladite unité de commande étant apte à envoyer un signal à l'ensemble de capteurs pour recaler l'angle de lacet à zéro dès lors que l'interrupteur est en position fermée.

Selon un autre mode de réalisation de ce moyen de calibrage des capteurs 155, un premier magnétomètre est disposé sur la partie fixe du moyen de transport, par exemple sur le cadre de la moto, et un deuxième magnétomètre est disposé sur la partie directionnelle du moyen de transport, par exemple la fourche de la moto. Les magnétomètres sont connectés à l'unité de commande 151 de la centrale inertielle 150, par une liaison filaire par exemple. Dans ce cas, à chaque fois que les deux magnétomètres indiquent une direction identique, cela signifie qu'ils sont alignés et que la roue de la moto est alignée avec le cadre selon l'axe longitudinal de la moto. La direction mesurée par chaque magnétomètre est adressée à l'unité de commande 151 de la centrale inertielle 150 qui les compare. Dès lors que le résultat de la comparaison démontre que les deux magnétomètres pointent dans la même direction, l'unité de commande 151 de la centrale inertielle 150 envoie alors un signal à l'ensemble de capteurs 155 pour recaler l'angle de lacet à zéro.

La centrale inertielle 150 est raccordée aux bornes de la source d'énergie électrique, telle qu'une batterie par exemple, du moyen de transport, c'est-à-dire de la moto dans l'exemple, et comprend un module 158 de détermination de l'état de fonctionnement du moteur. Ce module détecte la tension aux bornes de la batterie, et dès lors que la tension varie et que cette variation est supérieure à une valeur seuil prédéterminée, cela signifie que le moteur est en activité. L'unité de commande de la centrale inertielle est en veille tant que le moteur du moyen de transport n'est pas en fonctionnement. Dès lors que le module 158 de détermination de l'état de fonctionnement du moteur détecte une variation de tension significative du fonctionnement moteur, il envoie alors un signal à l'unité de commande de la centrale inertielle pour qu'elle s'allume.

L'unité de commande 151 de la centrale inertielle 150 est en outre de préférence raccordée à un capteur 157 de courant continu, apte à mesurer le courant dans le câble d'alimentation du phare du moyen de transport. Le capteur de courant continu peut par exemple se présenter sous la forme d'une pince ampérométrique à effet Hall. Sur réception du résultat de la mesure de courant, l'unité de commande 151 compare la valeur mesurée à une valeur seuil prédéterminée. Si la valeur mesurée est supérieure ou égale à la valeur seuil, alors cela signifie que le mode « plein phare » est activé. Si la valeur mesurée est inférieure à la valeur seuil prédéterminée, alors cela signifie que le mode « plein phare » est désactivé. Cette fonction permet d'activer des paramétrages sur le système. Selon le moyen de transport sur lequel est implanté le système selon l'invention, le mode « plein phare » peut être remplacé par tout autre système électrique, tel qu'un klaxon, un frein, un vérin, un gouvernail, un capteur de luminosité...

Le fait de savoir si le mode « plein phare » est activé permet de déterminer la manière de piloter la source lumineuse. En effet, lorsque le mode « plein phare » est activé, cela signifie qu'il n'y a pas d'usager de la route (auto, moto, camion, bus...) en sens inverse, la source lumineuse pourra donc être pilotée de manière à émettre une lumière puissante et dont la projection présente une large amplitude que ce soit verticalement et horizontalement. Dans le cas où la source lumineuse 160 se présente sous la forme d'une matrice à LED 161 par exemple, telle que schématisée en vue de face sur la Figure 3, l'unité de commande 151 pilote une première zone Z1 de LED destinées à être allumées lorsque le mode « plein phare » est activé ou une deuxième zone Z2 plus restreinte, située dans la partie basse de la matrice, lorsque le mode « plein phare » est désactivé. Ainsi, l'unité de commande n'activera pas l'allumage des LED 161 situées en haut de la matrice lorsque le mode « plein phare » ne sera pas activé. De plus, l'unité de commande pourra par exemple n'allumer qu'une LED sur deux dans la zone Z1 ou Z2 de la matrice dédiée à l'éclairage, de manière à réduire la puissance du faisceau lumineux émis par la source lumineuse. Les zones Z1 et Z2 sur la Figure 3 sont données à titre illustratif.

Dans l'exemple représenté sur la Figure 3, la zone Z1 la plus grande qui représente toute la surface de la matrice 160, sera par exemple sélectionnée lorsque le mode « plein phare » sera activé. Selon le paramétrage du système, le mode « plein phare » permet d'utiliser une partie ou l'intégralité des LEDs de la zone Z1. En revanche, lorsque le mode « plein phare » est désactivé, il convient alors de piloter la source lumineuse de manière à ce que la projection du faisceau lumineux présente une amplitude verticale et horizontale n'entrainant pas un éblouissement des usagers de la route circulant en sens inverse et à ce que la puissance du faisceau ne soit pas à son maximum. Dans ce cas, une zone Z2 plus petite sera par exemple sélectionnée. Seules les LED 161 comprises dans cette zone Z2 pourront alors être allumées. La Figure 3 représente un exemple selon lequel le mode « plein phare » est désactivé et la zone Z2 est sélectionnée. Les LED 161 situées les plus en bas de cette zone Z2 sont allumées (en noir sur la Figure 3) afin de projeter le faisceau vers le bas. Ce cas peut par exemple se présenter lorsque la moto accélère. L'accélération a tendance à modifier l'assiette de la moto, l'arrière s'abaissant et l'avant se soulevant. Pour compenser cet effet de tangage, seules les LED du bas de la zone Z2 sont alors allumées.

A l'inverse, lorsque la moto freine fort, l'avant de la moto a tendance à plonger. Dans ce cas, il faut au contraire allumer les LED situées dans la partie haute de la zone d'éclairage Z1 ou Z2 qui a été sélectionnée.

En outre, sur le schéma de la Figure 3, les LED ne sont pas allumées de manière symétrique, mais seules celles qui sont situées plus à droites sur la matrice, c'est-à-dire vers le côté gauche du motard, sont éclairées. Dans ce cas, la projection de ce faisceau lumineux est destinée à éclairer vers la gauche dans le sens de la route. Le schéma de la Figure 3 correspond donc par exemple à une moto dont le phare est allumé en mode « feux de croisement » et qui est en train d'accélérer dans un virage qui tourne vers la gauche.

La source lumineuse 160 et la centrale inertielle 150 peuvent être réalisées dans un seul et même boîtier. Cependant, on préfère les séparer afin de dissuader le vol. Dans ce cas, la centrale inertielle 150 pourra par exemple être disposée sous la selle de la moto, et elle sera reliée à la source lumineuse par une nappe de fils, chaque fils étant relié à une LED 161 de la matrice 160 à LED lorsque la source lumineuse est une matrice à LED, ou à un cristal liquide de l'écran LCD dans le cas où la source lumineuse comprend un ensemble avec écran LCD, ou à un micro-miroir d'une puce DLP dans le cas où la source lumineuse se présente sous la forme d'un projecteur DLP. Selon une variante de réalisation, la liaison entre la source lumineuse et la centrale inertielle peut être une liaison radio.

Lorsque le moteur du moyen de transport est démarré, le module 158 de détermination de l'état de fonctionnement du moteur détecte le démarrage et envoie un signal à la centrale inertielle 150 pour qu'elle s'allume. L'ensemble de capteur 155 de la centrale 150 mesure alors l'assiette de la moto. Le signal correspondant à la mesure de l'assiette est envoyé à l'unité de commande 151 de la centrale qui pilote alors un mécanisme motorisé pour ajuster la position verticale de la source lumineuse 160 en fonction de l'assiette de la moto. Pour cela, la source lumineuse 160 est fixée à la moto d'une part au moyen de fixations et d'autre part au moyen d'un mécanisme réglable, de type vis sans fin ou crémaillère à roue dentée par exemple ou tout autre mécanisme équivalent connu de l'homme du métier. Ce mécanisme réglable est raccordé à un servomoteur qui commande le mouvement du mécanisme afin d'orienter la source lumineuse 160 plus vers le bas ou plus vers le haut. Pour cela, l'unité de commande 151 compare l'assiette de la moto au démarrage, c'est à dire l'angle de tangage, avec l'assiette lorsque la moto est équilibrée, c'est-à-dire lorsque l'angle de tangage est égal à 0. Dès lors que l'angle de tangage est inférieur ou supérieur à zéro, l'unité de commande 151 pilote le servomoteur pour qu'il élève ou qu'il abaisse la position de la source lumineuse 160 en agissant sur le mécanisme réglable. Ainsi, lorsqu'un passager est sur la moto au démarrage, l'assiette de la moto est modifiée et si aucun réglage n'est fait, la source lumineuse éclairera trop haut et éblouira les autres usagers de la route circulant en sens inverse. Un tel réglage est obligatoire, mais jusqu'à présent il devait être effectué manuellement, et en pratique les utilisateurs ne le font pas. Grâce au système selon l'invention ce réglage est réalisé automatiquement à chaque démarrage, sans intervention du motard.

Une fois ce réglage réalisé, l'unité de commande 151 vérifie que la source lumineuse est bien connectée. Elle vérifie si le mode « plein phare » est activé ou non afin de sélectionner la zone d'éclairage Z1 et/ou Z2 de la source lumineuse à activer, et elle se met à l'écoute de l'ensemble de capteurs 155 afin de déterminer en temps réel, sur réception des mesures transmises par les capteurs, l'orientation de la moto dans l'espace, d'estimer sa trajectoire, et de piloter l'éclairage de la source lumineuse.

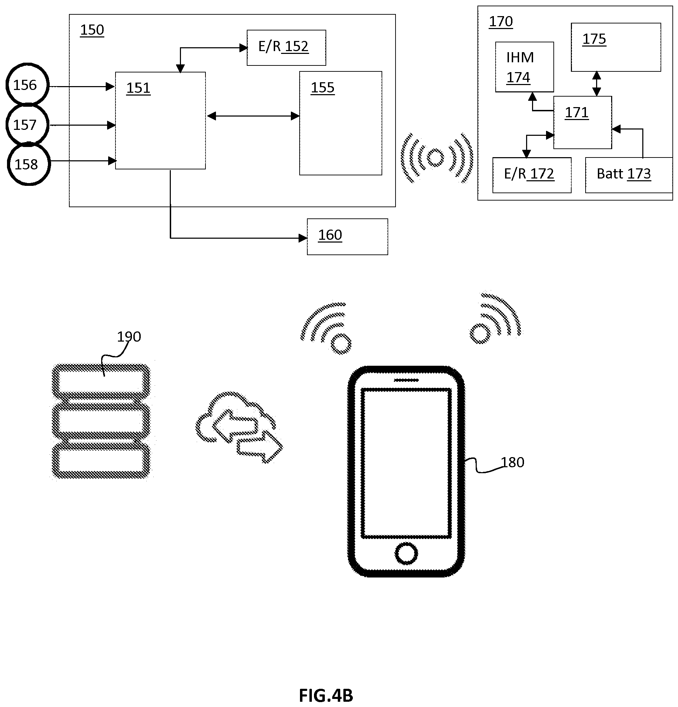

Dans un autre mode de réalisation, illustré sur les Figures 4A et 4B, le système comprend au moins un module déporté qui peut par exemple être fixé sur le casque, les lunettes, les gans ou tout autre équipement. Dans l'exemple de la Figure 4A, ce module déporté 170 est disposé sur le casque 110 du motard. Ce module déporté 170 comprend un deuxième ensemble de capteurs 175 et un moyen d'émission / réception E/R 172 pour communiquer avec la centrale inertielle qui comprend elle aussi un tel moyen d'émission/réception E/R 152. De préférence la communication entre le module 170 déporté et la centrale inertielle 150 est une communication par onde radio. De manière davantage préférée, la liaison radio est une liaison Sub 1 GHz. Dans un exemple cette fréquence pourra par exemple être de 868 MHz en Europe ou de 915 MHz aux Etats-Unis, cette fréquence pouvant bien entendu être adaptée en fonction des évolutions technologiques, règlementations locales ou choix du fabricant. Dans une variante de réalisation, cette communication peut aussi être filaire. Un tel module 170 déporté permet d'adresser les mesures d'angles de lacet, de tangage et roulis, effectuées par le deuxième ensemble de capteurs 175, à l'unité de commande 151. Selon le paramétrage du système, l'unité de commande tient compte d'une ou plusieurs mesures d'angles émanant d'un ensemble de capteurs et/ou une ou plusieurs mesures d'angles différentes des premières, issues d'un autre ensemble de capteurs. Dans ce cas, selon le paramétrage sélectionné, c'est - à-dire par exemple si le deuxième ensemble de capteur 175 du module 170 déporté, situé sur le casque dans l'exemple, est défini comme prioritaire, pour les mesures d'angles de lacet et de tangage, sur le premier ensemble de capteur 155 de la centrale inertielle 150, l'unité de commande 151 peut par exemple tenir compte des mesures d'angles de lacet et de tangage fournies par le deuxième ensemble de capteurs 175 du module 170 déporté et des mesures d'angle de roulis fournies par le premier ensemble de capteurs 155 de la centrale inertielle 150. En revanche, si le premier ensemble de capteurs 155 est défini comme prioritaire pour toutes les mesures, l'unité de commande 151 ne tient pas compte des mesures envoyées par le deuxième ensemble de capteurs 175. Ce mode de réalisation permet de tenir compte, ou non selon les paramètres sélectionnés, du comportement de l'utilisateur, en l'occurrence du motard dans l'exemple de la Figure 4A, et de s'adapter par exemple à la direction vers laquelle il regarde. Pour pouvoir fonctionner en autonomie, le module 170 déporté doit en outre comprendre une batterie Batt 173, un capteur de jauge et une interface homme/machine IHM 174 permettant de signaler l'état de la jauge de la batterie afin que le pilote sache lorsqu'il doit recharger la batterie du module. Une unité de gestion 171 permet de gérer les données du module 170 déporté, c'est-à-dire notamment d'envoyer à la centrale inertielle 150, par l'intermédiaire des moyens d'émission /réception E/R 172, 152, les mesures faites par le deuxième ensemble de capteurs 175, et d'afficher sur l'interface homme-machine IHM 174 le niveau de la jauge de la batterie Batt 173. Le module déporté 170 peut être allumé soit au moyen d'un interrupteur ou bien grâce à un détecteur de mouvement qui commandera la mise en veille du module dès lors que l'équipement sur lequel il est fixé, par exemple le casque, sera posé et qui déclenchera le fonctionnement du module dès que l'utilisateur prendra son équipement.

De manière avantageuse, le système est paramétré par le biais d'un logiciel applicatif téléchargeable sur un terminal mobile 180, de type téléphone mobile, plus connu sous la dénomination « smartphone », ou montre connectée ou encore télécommande radio ou filaire par exemple. Dans ce cas, le terminal mobile 180 communique avec l'unité de commande 151 de la centrale inertielle 150 d'une part et avec le module 170 casque d'autre part, au moyen d'une liaison radio qui peut par exemple être une liaison radio selon le standard de communication Bluetooth ou tout autre norme utilisée par l'industrie, et plus particulièrement le Bluetooth Low Energy, encore noté par son acronyme « BLE ».

Grâce à ce logiciel applicatif sur terminal mobile 180, il est possible d'appairer la centrale inertielle 150 et un ou plusieurs module(s) 170 déporté(s), par exemple disposé(s) sur un casque, avec le terminal mobile 180, dans le cas où le système doit être paramétré pour une moto et plusieurs casques par exemple. De même, il est possible d'appairer un module 170 déporté, par exemple disposé sur un casque, avec plusieurs centrales inertielles 150, dans le cas où le système doit être paramétré pour plusieurs moto et un casque. Pour cela, la centrale inertielle 150 et le ou les module(s) 170 déporté(s) sont identifiés par des identifiants. Le logiciel applicatif du terminal mobile 180 permet au motard d'autoriser l'appairage de la centrale inertielle 150 et du ou des modules 170 déporté(s) éventuel(s), préalablement identifiés, avec le terminal mobile 180.

Lorsque seuls la centrale inertielle 150 et le terminal mobile 180 sont appairés, le motard peut définir ses paramètres de réglage. Ces paramètres peuvent être définis en fonction de son style de conduite et de ses préférences. Ainsi, le motard peut par exemple définir, en fonction de la courbe du virage, s'il souhaite que l'éclairage de la courbe du virage soit instantané ou progressif, la rapidité de réaction de l'éclairage de la source lumineuse, la puissance de l'éclairage en fonction, pourquoi pas, de sa vitesse etc....Ces paramètres permettent également de peaufiner le fonctionnement du système pour les autres applications précitées (terrestres, maritime, aérien).

Lorsqu'un ou plusieurs modules 170 déporté(s) sont appairés avec le terminal mobile 180 et la centrale inertielle 150, l'utilisateur peut en outre définir les modalités de prise en compte, par l'unité de commande 151 de la centrale inertielle 150, des mesures réalisées par le deuxième ensemble de capteurs 175 du module 170 déporté. Si plusieurs modules déportés sont appairés, celui du pilote et celui d'un passager par exemple, l'utilisateur définira également dans les paramètres, le module déporté prioritaire lorsque les mesures faites par le deuxième ensemble de capteur du module déporté sont à prendre en compte par l'unité de commande. Les identifiants sont mémorisés dans le logiciel applicatif du terminal mobile 180, et transmis à la centrale inertielle 150, afin de permettre un appairage automatique ultérieur.

Le terminal mobile 180 peut en outre se connecter à un serveur 190 distant accessible via le réseau internet par exemple, par le biais du réseau de téléphonie mobile ou par le biais de l'ensemble de protocoles de communication sans fil connu sous le nom de « Wifi » et régis par les normes du groupe IEEE 802.11, ou encore par le biais d'une liaison radio, selon le standard de communication Bluetooth du groupe IEEE 802.15, ou d'une liaison filaire type USB raccordée à un équipement lui- même connecté au réseau internet, tel qu'un ordinateur. Le logiciel applicatif du terminal mobile 180 peut alors être mis à jour à distance lors de la connexion au serveur 190 distant. Le terminal mobile 180 permet également de transférer des mises à jour depuis le serveur 190 distant vers l'unité de commande 151 de la centrale inertielle 150 d'une part et vers l'unité de gestion 171 du module 170 déporté d'autre part.

Ce serveur distant 190 comprend en outre une ou plusieurs bases de données afin de permettre à chaque utilisateur, de créer son profil et d'y sauvegarder ses paramètres de réglage. Pour cela, le profil pourra par exemple comprendre des données sur la civilité de l'utilisateur, l'ordre de grandeur de son poids, sa moto, sa région d'habitation notamment pour les données topographiques et ses paramètres de réglage du système. Si l'utilisateur le souhaite, il peut alors partager certaines données de son profil, comme ses paramètres de réglages par exemple, avec d'autres utilisateurs inscrits dans la base de données. Ainsi, un utilisateur ayant un moyen de transport similaire, habitant dans une région similaire, par exemple une région montagneuse, pourra alors faire une recherche dans la base de données et trouver un ou plusieurs profils qui lui correspondent le plus. Il pourra alors choisir le paramétrage d'un profil qui semble être le plus proche du sien puis l'affiner selon son style de conduite et ses préférences. Dans la partie privée du profil, non accessible au public, pourra en outre être sauvegardée une identification de son système, c'est-à-dire les identifiants de tous les éléments de son système comme la centrale inertielle, la ou les source(s) lumineuse(s) et les éventuels modules déportés additionnels.

Le fait de pouvoir connecter le terminal mobile 180 au serveur distant 190 permet également de signaler tout vol d'équipement par exemple. Dans ce cas, la source lumineuse, la centrale inertielle et le module déporté étant tous identifiés, il suffit d'adresser au serveur distant le numéro d'identification de l'équipement ayant été volé afin de dissocier l'équipement du système et de bloquer son fonctionnement. Cet équipement volé ne pourra alors plus être appairé à un autre système et ne pourra pas fonctionner. Selon le paramétrage de l'utilisateur, le système pourra être désactivé à distance afin de réduire les risques de vol. Une identification du système par le serveur 190 peut en outre être réalisée à tout intervalle de temps prédéfini, par exemple en temps réel par le biais du terminal mobile 180, ou de manière périodique (toutes les semaines, ou tous les mois par exemple) ou à chaque événement, tel que le démarrage du système ou un changement de paramètres dans le profil qui peut indiquer une réinstallation du système sur un autre véhicule.

Selon une variante avantageuse, le système comprend en outre un capteur de géolocalisation en communication avec l'unité de commande 151 de la centrale inertielle 150. Ce capteur peut d'ailleurs être intégré, ou non, à la centrale inertielle 150. Le capteur de géolocalisation est plus particulièrement un capteur de type GNNS (global navigation satellite system), plus connu par GPS (acronyme anglais pour « Global Positioning System »). Le GPS est un système GNNS américan. D'autres systèmes dans le monde sont : GLONASS (Russie), BeiDou (Chine) Galileo (Europe). Les capteurs disponibles sur le marché permettent de traiter simultanément les données de plusieurs systèmes GNNS. Un tel capteur envoie des informations à l'unité de commande sur la trajectoire suivie par la moto, avec une précision pouvant aller jusqu'à quelques mètres, de sorte que l'unité de commande 151 peut anticiper le pilotage du dispositif associé. Pour cela, lorsque l'unité de commande détecte que le moyen de transport va tourner dans 3 mètres, cette distance étant paramétrable par l'utilisateur et/ou par le fabricant selon les normes en vigueur, elle anticipe en orientant le faisceau lumineux avant de prendre le virage. Une telle variante permet d'améliorer encore la précision de l'éclairage du moyen de transport, la sécurité et le confort de l'utilisateur.

Dans ce mode de réalisation, lorsque le moteur du moyen de transport est démarré, le module 158 de détermination de l'état de fonctionnement du moteur détecte le démarrage et envoie un signal à la centrale inertielle pour qu'elle s'allume. L'ensemble de capteur 155 de la centrale 150 mesure alors l'assiette de la moto. Le signal correspondant à la mesure de l'assiette est envoyé à l'unité de commande 151 de la centrale qui la compare avec l'assiette lorsque la moto est équilibrée, c'est-à-dire lorsque l'angle de tangage est égal à 0. Dès lors que l'angle de tangage est inférieur ou supérieur à zéro, l'unité de commande 151 pilote le servomoteur agissant sur le mécanisme réglable précédemment décrit, pour ajuster la position verticale de la source lumineuse 160 en fonction de l'assiette de la moto. Selon une variante, l'unité de commande de la centrale inertielle peut également piloter le servomoteur agissant sur le mécanisme réglable, sur réception d'une commande émanant du terminal mobile 180. Ainsi, il est possible de permettre à l'utilisateur de la moto de régler la hauteur de la source lumineuse avant de rouler. Une fois ce réglage réalisé, ou simultanément à ce réglage, le logiciel applicatif du terminal mobile 180 identifie et s'appaire avec l'unité de commande 151 de la centrale inertielle 150 et l'unité de gestion des données 171 du module 170 casque et vérifie que la source lumineuse 160 est bien connectée à la centrale inertielle. Le motard peut en outre sélectionner les paramètres qu'il souhaite utiliser pour le parcours qu'il va faire. Il peut ainsi déterminer la vitesse de réaction de la source lumineuse, si il souhaite une variation brutale ou progressive de la projection du faisceau lumineux, si les mesures faites par les capteurs de son module 170 casque doivent être prises en compte ou non, ou si elles doivent être prises en compte uniquement dans des situations particulières, telles que par exemple lorsque seulement le mode « plein phare » est activé. L'unité de commande 151 de la centrale inertielle vérifie ensuite si le mode « plein phare » est activé ou non afin de sélectionner la zone d'éclairage Z1 et/ou Z2 de la source lumineuse 160 à activer. Enfin, l'unité de commande 151 se met à l'écoute du premier et/ou du deuxième ensemble de capteurs 155 et/ou 175, afin de déterminer en temps réel, sur réception des mesures transmises par les capteurs, l'orientation de la moto dans l'espace, d'estimer sa trajectoire, et de piloter l'éclairage de la source lumineuse.

Lorsque la source lumineuse est constituée d'une matrice à LED, une telle matrice consomme beaucoup d'énergie et chauffe beaucoup. Pour éviter que les LED ne chauffent de trop et entrainent une dégradation du boitier de la source lumineuse, ce-dernier peut être équipé d'orifices permettant à l'air de circuler et de le refroidir. En outre, la puissance de la matrice peut être paramétrée, par le biais du logiciel applicatif du terminal mobile 180, en fonction des conditions environnementales. Ainsi, il est possible de faire varier la puissance de la source lumineuse en fonction de la température extérieure et/ou de la vitesse du moyen de transport par exemple, en allumant une LED sur deux ou sur trois par exemple, dans la zone Z1, Z2 activée pour l'éclairage. Il est également possible de paramétrer une réduction temporaire de la puissance lumineuse des LED, connu sous le nom « d'effet dimming », qui permet de contrôler la consommation d'énergie, donc la chaleur produite par la source lumineuse. Cette réduction temporaire de la puissance lumineuse pourra par exemple être commandée selon la vitesse estimée. Ainsi, la puissance lumineuse des LED pourra par exemple être réduite de 50% lorsque la vitesse sera inférieure à 3km/h.

L'invention ne se limite aucunement au domaine de la moto qui vient d'être décrit uniquement à titre d'exemple illustratif. Les applications d'un tel système sont en effet nombreuses. Le système selon l'invention peut en effet équiper tout type de moyen de transport de personnes ou de marchandises, qu'il soit terrestre, aérien ou maritime. Ainsi, le système peut être installé sur un moyen de transport quelconque choisi parmi au moins l'un des moyens suivants : engin roulant tel que motocyclette, automobile, camion, bicyclette ; engin flottant tel que bateau, scooter de mer, planche de surf ou à voile ; ou engin volant tel qu'avion, drone, hélicoptère, delta plane, parapente par exemple. Le système pourra être fixé sur tout moyen de transport existant ou à venir, ou bien être fabriqué et installé sur le moyen de transport en usine lors de sa fabrication.

Parmi les applications envisagées, on peut citer par exemple le transport de marchandises fragiles, telles que des œuvres d'art par exemple. Dans ce cas, les marchandises sont disposées sur une plateforme mobile de support de marchandises, la plateforme étant mue par un mécanisme à vérins ou à pistons par exemple. Aujourd'hui, les suspensions des camions ne permettent pas de compenser la force centrifuge s'exerçant au moment des virages. Grâce au système selon l'invention, l'unité de commande de la centrale inertielle peut piloter la plateforme mobile, afin de l'orienter de manière à compenser la force centrifuge.

Une autre application envisagée peut par exemple résider dans la livraison de colis au moyen de drones. Dans ce cas, une fois le colis livré, le drone doit pouvoir rejoindre un camion de livraison lui-même en déplacement. Le toit du camion peut alors être équipé d'une base mobile d'atterrissage de drone. Le système selon l'invention, équipant le camion, permet alors de piloter la base mobile d'atterrissage pour qu'elle conserve une position équilibrée et perpendiculaire à l'axe de gravitation terrestre, quels que soient les mouvements du camion sur la route, afin que le drone puisse atterrir sans se faire déporter. Le drone, lui-même équipé d'un tel système de compensation des variations d'inclinaison, peut alors synchroniser et aligner son angle d'atterrissage en fonction du mouvement du camion et de la plateforme mobile.

Encore une autre application envisagée concerne l'orientation du faisceau lumineux d'un phare de bateau qui doit éclairer une direction vers laquelle le bateau se dirige malgré l'état de la mer qui le soumet aux mouvements permanents de roulis, tangage et lacet.

## Revendications

1. Système d'adaptation aux variations d'inclinaisons par rapport à l'axe de gravitation terrestre d'un dispositif (160) porté par un moyen de transport soumis à des mouvements de roulis, de tangage et de lacet, et ledit système comprenant ledit dispositif et une centrale inertielle (150) couplé audit dispositif, ladite centrale inertielle comprenant :
- un ensemble de capteurs (155) permettant de mesurer, en temps réel, les inclinaisons dans l'espace dudit moyen de transport soumis auxdits mouvements de roulis, de tangage et de lacet, et
- une unité de commande (151) apte, sur réception des mesures issues de l'ensemble de capteurs, à déterminer l'orientation dans l'espace et à estimer la trajectoire dudit moyen de transport, et à piloter ledit dispositif (160) de manière à adapter sa position à ladite orientation dans l'espace et à ladite trajectoire estimée dudit moyen de transport,
ledit système étant **caractérisé en ce qu'**il comprend en outre un module (170) déporté adapté pour être fixé sur un équipement porté par l'utilisateur du moyen de transport, et comprenant un deuxième ensemble de capteurs (175), mesurant en temps réel des angles de roulis, de tangage et de lacet, et un moyen de communication (172) pour communiquer les mesures réalisées par ledit deuxième ensemble de capteurs (175) vers la centrale inertielle (155) comprenant elle aussi un moyen de communication (152) et **en ce que**, en fonction de paramètres de fonctionnement sélectionnés, l'unité de commande (151) prend en compte les mesures d'angles issues du premier et du deuxième ensemble de capteurs (155 ; 175) dans l'estimation de la trajectoire du moyen de transport.

2. Système selon la revendication 1, **caractérisé en ce que** le dispositif (160) piloté par l'unité de commande (151) de la centrale inertielle (150) est choisi parmi l'un au moins des dispositifs suivants : une source lumineuse, un dispositif de capture d'images, un dispositif de pointage laser, une plateforme mobile.

3. Système selon la revendication 1 ou 2, **caractérisé en ce que** le dispositif (160) est une source lumineuse dont la position est adaptée mécaniquement au moyen de trois servomoteurs.

4. Système selon la revendication 1 ou 2, **caractérisé en ce que** le dispositif (160) est une source lumineuse matricielle et **en ce que** l'unité de commande (151) de la centrale inertielle (150) pilote la source lumineuse de manière à adapter la position de la projection (P3) de son faisceau lumineux.

5. Système selon la revendication 4, **caractérisé en ce que** la source lumineuse matricielle se présente sous l'une des formes suivantes :
- une matrice à diodes électroluminescentes (161), dont le fonctionnement de chaque diode (161) est piloté par l'unité de commande (151) de la centrale inertielle (150),
- un écran à cristaux liquide (LCD), dont chaque cristal est piloté par l'unité de commande (151) de la centrale inertielle (150) et laisse passer plus ou moins de lumière issue d'une diode électroluminescente (LED) ou
- un projecteur comprenant une puce DLP dont chaque micro-miroir est piloté par l'unité de commande (151) de la centrale inertielle (150) pour agir sur la trajectoire de réflexion d'un faisceau lumineux issu d'une diode électroluminescente.

6. Système selon l'une des revendications 1 à 5, **caractérisé en ce qu'**il comprend en outre un moyen de calibrage de l'ensemble de capteurs (155), permettant de corriger une dérive selon l'angle de lacet en recalant ledit angle de lacet à zéro lorsqu'une partie directionnelle et une partie fixe du moyen de transport sont alignées.

7. Système selon la revendication 6, **caractérisé en ce que** le moyen de calibrage se présente sous l'une des formes suivantes :
- un premier magnétomètre disposé sur la partie fixe du moyen de transport et un deuxième magnétomètre disposé sur la partie directionnelle du moyen de transport, lesdits magnétomètres étant connectés à l'unité de commande (151) de la centrale inertielle (150), ladite unité de commande (151) étant apte à comparer les mesures issues des deux magnétomètres et, en fonction du résultat de la comparaison, à envoyer un signal à l'ensemble de capteurs (155) pour recaler l'angle de lacet à zéro ;
- un aimant disposé sur la partie directionnelle du moyen de transport et un capteur à effet Hall disposé sur la partie fixe du moyen de transport et apte à détecter les variations du champ électromagnétique émis par l'aimant, ledit capteur à effet Hall étant connecté à l'unité de commande (151) de la centrale inertielle (150), ladite unité de commande (151) étant apte à comparer l'intensité du champ magnétique mesuré par le capteur à effet Hall à une valeur seuil prédéterminée et, en fonction du résultat de la comparaison, à envoyer un signal à l'ensemble de capteurs (155) pour recaler l'angle de lacet à zéro ; ou
- un aimant disposé sur la partie directionnelle du moyen de transport et un interrupteur à lame souple disposé sur la partie fixe dudit moyen de transport, ledit interrupteur étant connecté à l'unité de commande (151) de la centrale inertielle (150), ladite unité de commande étant apte à envoyer un signal à l'ensemble de capteurs (155) pour recaler l'angle de lacet à zéro dès lors que l'interrupteur est en position fermée.

8. Système selon l'une des revendications 1 à 7, **caractérisé en ce qu'**il comprend en outre un capteur de géolocalisation, communiquant avec l'unité de commande (151) de la centrale inertielle (150) et permettant à cette-dernière d'anticiper le pilotage du dispositif associé (160).

9. Système selon l'une des revendications 1 à 8, **caractérisé en ce qu'**il comprend en outre un terminal mobile (180) comprenant un logiciel applicatif de gestion des paramètres de fonctionnement du système, ledit terminal mobile étant apte à identifier et s'appairer avec ladite centrale inertielle (150) et à communiquer avec elle afin de paramétrer son fonctionnement.

10. Système selon la revendication 9, **caractérisé en ce qu'**il comprend en outre un serveur distant (190) apte à communiquer avec le terminal mobile (180) et dans lequel sont stockées une ou plusieurs bases de données de profils utilisateurs.

11. Système selon l'une des revendications 1 à 10, **caractérisé en ce que** le dispositif (160) piloté par l'unité de commande (151) de la centrale inertielle (150) est une source lumineuse additionnelle ou intégrée au phare du moyen de transport.

12. Système selon l'une des revendications 1 à 11, **caractérisé en ce qu'**il comprend en outre un mécanisme motorisé d'ajustement de la position du dispositif (160) par rapport à l'assiette du moyen de transport au démarrage, le mécanisme motorisé étant actionné par le biais de l'unité de commande (151) de la centrale inertielle (150) sur réception d'une mesure de l'angle de tangage et/ou sur réception d'une commande émanant du terminal mobile (180).

13. Système selon l'une des revendications 1 à 12, **caractérisé en ce que** l'unité de commande (151) de la centrale inertielle (150) est raccordée à un capteur (157) de courant continu apte à mesurer le courant dans un câble d'alimentation du phare du moyen de transport et, sur réception de la mesure de courant, l'unité de commande (151) compare la valeur mesurée à une valeur seuil prédéterminée et, en fonction du résultat de la comparaison, détermine si le phare est allumé en mode « plein phare » ou non.

14. Système selon les revendications 9 à 13, **caractérisé en ce que** le terminal mobile (180) est en outre apte à identifier et à s'appairer avec au moins un module (170) déporté.

15. Moyen de transport de personnes ou de marchandises, **caractérisé en ce qu'**il comprend un système d'adaptation aux variations d'inclinaisons conforme à l'une des revendications 1 à 14, et **en ce que** ledit moyen de transport est choisi parmi au moins l'un des moyens suivants : engin roulant tel que motocyclette, automobile, camion, bicyclette; engin flottant tel que bateau, scooter de mer, planche de surf ou à voile ; ou engin volant tel que avion, drone, hélicoptère, delta plane, parapente.

## Patentansprüche

1. Ein System zur Anpassung an Neigungsschwankungen in Bezug auf die Erdgravitationsachse eines Geräts (160), das von einem Transportmittel getragen wird, das Roll-, Nick- und Gierbewegungen ausgesetzt ist,
wobei das System diese Vorrichtung und eine mit der Vorrichtung gekoppelte Trägheitseinheit (150) umfasst. Die Trägheitseinheit umfasst Folgendes:
- einen Satz von Sensoren (155), die es ermöglichen, in Echtzeit die Neigungen des Transportmittels im Raum zu messen, die den Roll-, Nick- und Gierbewegungen ausgesetzt sind, und
- eine Steuereinheit (151), die in der Lage ist, beim Empfang der Messungen der Sensoren die Ausrichtung im Raum zu bestimmen und die Bewegung des Transportmittels abzuschätzen sowie die Vorrichtung (160) dahingehend zu steuern, dass seine Position an die Ausrichtung im Raum und an die geschätzte Bewegung des Transportmittels angepasst wird,
das System zeichnet sich dadurch aus, dass es ferner ein Fernmodul (170) umfasst, das zur Befestigung an Geräten geeignet ist, die vom Benutzer des Transportmittels getragen werden, sowie einen zweiten Satz von Sensoren (175), der in Echtzeit Roll-, Nick- und Gierwinkel misst, sowie ein Kommunikationsmittel (172), das die vom zweiten Satz von Sensoren (175) durchgeführten Messungen an die Trägheitseinheit (155) übermittelt, die ebenfalls ein Kommunikationsmittel (152) enthält, wobei die Steuereinheit (151) gemäß ausgewählten Betriebsparametern die Winkelmessungen vom ersten und vom zweiten Satz von Sensoren (155, 175) bei der Schätzung der Bewegung des Transportmittels berücksichtigt.

2. Das System nach Anspruch 1 ist **dadurch gekennzeichnet, dass** die von der Steuereinheit (151) der Trägheitseinheit (150) gesteuerte Vorrichtung (160) aus mindestens einer der folgenden Vorrichtungen besteht: eine Lichtquelle, eine Vorrichtung für ein Bilderfassungsgerät, ein Laserzeigegerät, eine mobile Plattform.

3. Das System nach Anspruch 1 oder 2 ist **dadurch gekennzeichnet, dass** die Vorrichtung (160) eine Lichtquelle ist, deren Position mittels drei Stellmotoren mechanisch angepasst wird.

4. Das System nach Anspruch 1 oder 2 ist **dadurch gekennzeichnet, dass** die Vorrichtung (160) eine Matrixlichtquelle ist und dass die Steuereinheit (151) der Trägheitseinheit (150) die Lichtquelle steuert, um die Position der Projektion (P3) seines Lichtstrahls anzupassen.

5. Das System nach Anspruch 4 ist **dadurch gekennzeichnet, dass** die Matrixlichtquelle in einer der folgenden Formen vorliegt:
- eine Leuchtdiodenmatrix (161), deren Betrieb von jeder Diode (161) durch die Steuereinheit (151) der Trägheitseinheit (150) gesteuert wird,
- eine Flüssigkristallanzeige (LCD), wobei jeder Kristall von der Steuereinheit (151) der Trägheitseinheit (150) gesteuert wird und mehr oder weniger Licht von einer Leuchtdiode (LED) durchlässt oder
- einen Projektor mit einem DLP-Chip, dessen Mikrospiegel von der Steuereinheit (151) der Trägheitseinheit (150) angesteuert wird, um mittels Reflexion eines Lichtstrahls von einer Leuchtdiode zu agieren.

6. Das System nach einem der Ansprüche 1 bis 5 ist **dadurch gekennzeichnet, dass** es ferner Mittel zum Kalibrieren des Satzes von Sensoren (155) zum Korrigieren einer Drift gemäß dem Gierwinkel durch Zurücksetzen des Gierwinkels auf Null umfasst, wenn ein gerichteter Teil und ein fester Teil des Transportmittels ausgerichtet sind.

7. Das System nach Anspruch 6 ist **dadurch gekennzeichnet, dass** das Kalibriermittel in einer der folgenden Formen vorliegt:
- ein erstes Magnetometer, das an dem festen Teil des Transportmittels angebracht ist, und ein zweites Magnetometer, das an dem gerichteten Teil des Transportmittels angebracht ist, wobei die Magnetometer mit der Steuereinheit (151) der Trägheitseinheit (150) verbunden sind und die Steuereinheit (151) in der Lage ist, die Messungen von den zwei Magnetometern zu vergleichen und abhängig vom Ergebnis des Vergleichs ein Signal an den Satz von Sensoren (155) zu senden, um den Gierwinkel auf Null zurückzusetzen;
- ein Magnet, der auf dem gerichteten Teil des Transportmittels angeordnet ist, sowie ein Hall-Effekt-Sensor, der auf dem festen Teil des Transportmittels angeordnet ist und die Variationen des vom Magneten emittierten elektromagnetischen Feldes erfasst, wobei der Hall-Effekt-Sensor mit der Steuereinheit (151) der Trägheitseinheit (150) verbunden ist und die Steuereinheit (151) die vom Hall-Effekt-Sensor gemessene Intensität des Magnetfelds mit einem vorbestimmten Schwellenwert vergleicht. Abhängig vom Ergebnis des Vergleichs wird ein Signal an den Satz von Sensoren (155) gesendet um den Gierwinkel auf Null zurückzusetzen; oder
- ein Magnet, der an dem gerichteten Teil des Transportmittels angebracht ist, sowie ein flexibler Reedschalter, der an dem festen Teil des Transportmittels angebracht ist, wobei der Schalter mit der Steuereinheit (151) der Trägheitseinheit (150) verbunden ist und die Steuereinheit ein Signal an den Satz von Sensoren (155) sendet, um den Gierwinkel auf Null zurückzusetzen, sobald sich der Schalter in der geschlossenen Position befindet.

8. Das System nach einem der Ansprüche 1 bis 7 ist **dadurch gekennzeichnet, dass** es ferner einen Geolokalisierungssensor umfasst, der mit der Steuereinheit (151) der Trägheitseinheit (150) kommuniziert und ermöglicht, dass letztere die Steuerung des zugehörigen Geräts (160) übernimmt.

9. Das System nach einem der Ansprüche 1 bis 8 ist **dadurch gekennzeichnet, dass** es ferner ein mobiles Endgerät (180) umfasst, das eine Anwendungssoftware zum Verwalten der Betriebsparameter des Systems enthält, wobei das mobile Endgerät in der Lage ist, die Trägheitseinheit (150) zu identifizieren und sich mit ihr zu koppeln, um mit ihr zu kommunizieren und ihren Betrieb zu konfigurieren.

10. Das System nach Anspruch 9 ist **dadurch gekennzeichnet, dass** es ferner einen entfernten Server (190) umfasst, der mit dem mobilen Endgerät (180) kommuniziert und eine oder mehrere Datenbanken von Benutzerprofilen gespeichert hat.

11. Das System nach einem der Ansprüche 1 bis 10 ist **dadurch gekennzeichnet, dass** die von der Steuereinheit (151) der Trägheitseinheit (150) gesteuerte Vorrichtung (160) eine zusätzliche Lichtquelle ist oder im Scheinwerfer des Transportmittels integriert ist.

12. Das System nach einem der Ansprüche 1 bis 11 ist **dadurch gekennzeichnet, dass** es ferner einen motorisierten Mechanismus zum Einstellen der Position der Vorrichtung (160) umfasst. In Bezug auf die Lage des Transportmittels beim Start wird der motorisierte Mechanismus mittels der Steuereinheit (151) der Trägheitseinheit (150) nach Erhalt einer Messung des Nickwinkels und/oder nach Erhalt eines Befehls vom mobilen Endgerät (180) betätigt.

13. Das System nach einem der Ansprüche 1 bis 12 ist **dadurch gekennzeichnet, dass** die Steuereinheit (151) der Trägheitseinheit (150) mit einem Gleichstromsensor (157) verbunden ist, der den Strom im Stromkabel des Scheinwerfers des Transportmittels messen kann. Nach Erhalt der Strommessung vergleicht die Steuereinheit (151) den gemessenen Wert mit einem vorbestimmten Schwellenwert. Abhängig vom Ergebnis des Vergleichs wird bestimmt, ob der Scheinwerfer im Modus "Fernlicht" eingeschaltet ist oder nicht.

14. Das System nach Anspruch 9 bis 13 ist **dadurch gekennzeichnet, dass** das mobile Endgerät (180) ferner mindestens ein entferntes Modul (170) identifizieren und sich mit diesem koppeln kann.

15. Die Transportmittel für Personen oder Güter sind **dadurch gekennzeichnet, dass** sie ein System zur Anpassung an Neigungsschwankungen gemäß einem der Ansprüche 1 bis 14 umfassen, wobei das Transportmittel aus mindestens einem der folgenden Mittel besteht: rollende Fahrzeuge wie Motorräder, Automobile, LKW, Fahrräder; Schwimmvorrichtungen wie Boote, Wasserscooter, Surfbretter oder Windsurfbretter; oder Fluggeräte wie Flugzeuge, Drohnen, Hubschrauber, Drachen, Gleitschirme.

## Claims

1. A system for adapting to inclination variations with respect to the earth's gravitational axis of a device (160) carried by a transport means subject to roll, pitch and yaw movements, and said system comprising said device and an inertial unit (150) coupled to said device, said inertial unit comprising:
- a set of sensors (155) enabling measuring, in real time, the inclinations in space of said transport means subject to said roll, pitch and yaw movements, and
- a control unit (151) able, upon reception of the measurements from the set of sensors, to determine the orientation in space and to estimate the trajectory of said transport means, and to drive said device (160) so as to adapt its position to said orientation in space and to said estimated trajectory of said transport means,
said system being **characterized in that** it further comprises a remote module (170) adapted to be fixed to an equipment borne by the user of the transport means, and comprising a second set sensor array (175), measuring in real time roll, pitch and yaw angles, and communication means (172) for communicating measurements made by said second set of sensors (175) to the inertial unit (155), the inertial unit also comprising a communication means (152) and **in that**, according to selected operating parameters, the control unit (151) takes into account the angle measurements from the first and second set of sensors (155; 175) in the estimation of the trajectory of the means of transport.

2. System according to Claim 1, **characterized in that** the device (160) controlled by the control unit (151) of the inertial unit (150) is chosen from at least one of the following devices: a light source, an image capture device, a laser pointing device, a mobile platform.

3. System according to claim 1 or 2, **characterized in that** the device (160) is a light source whose position is mechanically adapted by means of three servomotors.

4. System according to claim 1 or 2, **characterized in that** the device (160) is a light source array and **in that** the control unit (151) of the inertial unit (150) controls the light source so as to adapt the position of the projection (P3) of its light beam.

5. System according to Claim 4, **characterized in that** the light source array is in one of the following forms:
- a light-emitting diode (161) array, the operation of each diode (161) being controlled by the control unit (151) of the inertial unit (150),
- a liquid crystal display (LCD), each crystal being controlled by the control unit (151) of the inertial unit (150) and allows more or less light from a light-emitting diode (LED) to pass or
- a projector comprising a DLP chip, each micro-mirror of which being controlled by the control unit (151) of the inertial unit (150) to act on the reflection trajectory of a light beam from a light emitting diode.

6. System according to one of claims 1 to 5, **characterized in that** it further comprises a calibration means of the set of sensors (155), for correcting a drift according to the yaw angle by resetting said yaw angle to zero when a directional part and a fixed part of the means of transport are aligned.

7. System according to Claim 6, **characterized in that** the calibration means is in one of the following forms:
- a first magnetometer arranged on the fixed part of the transport means and a second magnetometer arranged on the directional part of the transport means, said magnetometers being connected to the control unit (151) of the inertial unit (150), said control unit (151) being able to compare the measurements from the two magnetometers and, depending on the result of the comparison, to send a signal to the set of sensors (155) to reset the yaw angle to zero;
- a magnet disposed on the directional part of the transport means and a Hall effect sensor disposed on the fixed part of the transport means and able to detect the variations of the electromagnetic field emitted by the magnet, said Hall effect sensor being connected to the control unit (151) of the inertial unit (150), said control unit (151) being able to compare the intensity of the magnetic field measured by the Hall effect sensor with a predetermined threshold value and, depending on the result of the comparison, to send a signal to the set of sensors (155) to reset the yaw angle to zero; or
- a magnet disposed on the directional part of the transport means and a flexible blade switch disposed on the fixed part of said transport means, said switch being connected to the control unit (151) of the inertial unit (150), said control unit being adapted to send a signal to the set of sensors (155) to reset the yaw angle to zero when the switch is in the closed position.

8. System according to one of claims 1 to 7, **characterized in that** it further comprises a geolocation sensor, communicating with the control unit (151) of the inertial unit (150) and allowing the latter to anticipate the piloting of the associated device (160).

9. System according to one of claims 1 to 8, **characterized in that** it further comprises a mobile terminal (180) comprising an application software for managing the operating parameters of the system, said mobile terminal being able to identify and be paired with said inertial unit (150) and to communicate with it in order to parameterize its operation.

10. System according to claim 9, **characterized in that** it further comprises a remote server (190) able to communicate with the mobile terminal (180) and in which is stored one or more bases of user profile data.

11. System according to one of claims 1 to 10, **characterized in that** the device (160) controlled by the control unit (151) of the inertial unit (150) is an additional light source or integrated in the headlight of the means of transport.

12. System according to one of claims 1 to 11, **characterized in that** it further comprises a motorized mechanism for adjusting the position of the device (160) relative to the attitude of the transport means at startup, the motorized mechanism being driven by the control unit (151) of the inertial unit (150) upon receipt of a measurement of the pitch angle and / or upon receipt of a command from the mobile terminal (180) .

13. System according to one of claims 1 to 12, **characterized in that** the control unit (151) of the inertial unit (150) is connected to a direct current sensor (157) capable of measuring the current in a power cable supplying the headlight of the transport means and, upon receipt of the current measurement, the control unit (151) compares the measured value with a predetermined threshold value and, depending on the result of the comparison, determines whether the headlamp is lit in "full light" mode.

14. System according to claims 9 to 13, **characterized in that** the mobile terminal (180) is furthermore capable of identifying and pairing with at least one remote module (170).

15. A means of transporting persons or goods, **characterized in that** it comprises a system for adapting to inclination variations according to one of claims 1 to 14, and **in that** said means of transport is selected from at least one of one of the following means: rolling vehicle such as motorcycle, automobile, truck, bicycle; floating craft such as boat, sea scooter, surfboard or windsurf; or flying machine such as airplane, drone, helicopter, flat delta, paragliding.
